# EUROPEAN PATENT APPLICATION

(11) **EP 4 141 709 A1**
(43) Date of publication of application: **01.03.2023**
(21) Application number: 20931832.8
(22) Date of filing: 24.04.2020
(51) Int. Cl.: G06F 21/32

(54) **AUTHENTICATION DEVICE, AUTHENTICATION METHOD, AND AUTHENTICATION PROGRAM**

(71) Applicant: FUJITSU LIMITED, Kawasaki-shi, Kanagawa 211-8588 (JP)
(72) Inventor: ABE, Narishige, Kawasaki-shi, Kanagawa 211-8588 (JP)
(74) Representative: Hoffmann Eitle
(86) International application number: PCT/JP2020/017864
(87) International publication number: WO 2021/215015

(57) **Abstract**

An authentication apparatus includes: an acquisition unit that acquires an image; a detection unit that performs face detection of the image; a collation unit that collates, for each face region obtained by the face detection, a feature amount of the face region with a feature amount of a face of a legitimate user included in predetermined registration data; a presentation unit that presents, when the face region obtained by the face detection includes the face of the legitimate user and a face of a third party other than the legitimate user, an aiming frame with which aim of capturing of an image of the face of the legitimate user is to be aligned on the image; and a continuation control unit that continues continuous authentication after logon when a degree of matching between the face region detected by the face detection and the aiming frame satisfies a predetermined condition.

## Description

### FIELD

The present invention relates to an authentication technology.

### BACKGROUND

In various information processing terminals such as personal computers and smartphones, personal authentication such as password (PW) authentication and biometric authentication is performed at the time of logon. In a case where such authentication is performed only at the time of logon, there is an aspect that an information processing terminal after the logon may be used by a third party other than a legitimate user.

From such an aspect, a continuous authentication technology for continuously authenticating a user who uses an information processing terminal even after logging on to the information processing terminal has been disclosed. For example, as an example of the continuous authentication technology, it has been proposed to detect peeping or the like by using a camera attached to a terminal.

### SUMMARY

### TECHNICAL PROBLEM

However, in the continuous authentication technology described above, only a use case where a legitimate user uses the information processing terminal alone is assumed. Thus, all situations where a third party other than the legitimate user is captured by the camera attached to the terminal are uniformly detected as peeping. In other words, in the continuous authentication technology described above, a situation where a third party peeps into use of an information processing terminal by a legitimate user and a situation where a person equivalent to the legitimate user uses the information processing terminal together with the legitimate user are confused. Therefore, the continuous authentication technology described above has an aspect that an information processing terminal may not be used by a plurality of people including a legitimate user.

In one aspect, it is an object of the present invention to provide an authentication apparatus, an authentication method, and an authentication program capable of implementing continuous authentication that enables use by a plurality of people.

### SOLUTION TO PROBLEM

A face authentication apparatus according to an aspect includes: an acquisition unit that acquires an image; a detection unit that performs face detection of the image; a collation unit that collates, for each face region obtained by the face detection, a feature amount of the face region with a feature amount of a face of a legitimate user included in predetermined registration data; a presentation unit that presents, in a case where the face region obtained by the face detection includes the face of the legitimate user and a face of a third party other than the legitimate user, an aiming frame with which aim of capturing of an image of the face of the legitimate user is to be aligned on the image; and a continuation control unit that continues continuous authentication after logon in a case where a degree of matching between the face region detected by the face detection and the aiming frame satisfies a predetermined condition.

### ADVANTAGEOUS EFFECTS OF INVENTION

It is possible to implement continuous authentication that enables use by a plurality of people.

### BRIEF DESCRIPTION OF DRAWINGS

FIG. 1 is a block diagram illustrating an example of a functional configuration of an information processing terminal according to a first embodiment;
FIG. 2 is a diagram illustrating an example of a live image;
FIG. 3 is a diagram illustrating an example of the live image;
FIG. 4 is a flowchart illustrating a procedure of continuous authentication processing according to the first embodiment;
FIG. 5 is a diagram illustrating an example of a live image;
FIG. 6 is a diagram illustrating an example of the live image; and
FIG. 7 is a diagram illustrating a hardware configuration example of a computer.

### DESCRIPTION OF EMBODIMENTS

Hereinafter, an authentication apparatus, an authentication method, and an authentication program according to the present application will be described with reference to the accompanying drawings. Note that the embodiments do not limit the disclosed technology. Additionally, each of the embodiments may be suitably combined within a range without causing contradiction between processing contents.

### [First Embodiment]

### [Functional Configuration Example of Information Processing Terminal]

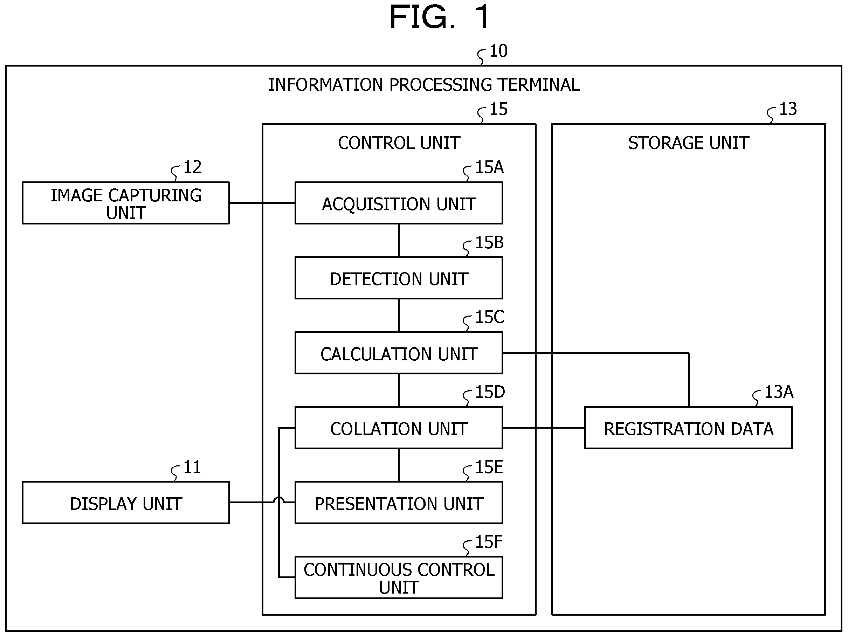

FIG. 1 is a block diagram illustrating an example of a functional configuration of an information processing terminal 10 according to a first embodiment. The information processing terminal 10 illustrated in FIG. 1 may be equipped with a continuous authentication function that corresponds to an example of an authentication apparatus and continuously authenticates a user who uses the information processing terminal 10 after logon. As merely an example, such a continuous authentication function may be packaged with functions such as absence detection, peeping detection, and log storage.

The information processing terminal 10 illustrated in FIG. 1 may be an optional computer. For example, a laptop or desktop personal computer or the like may correspond to the information processing terminal 10. This is merely an example, and the information processing terminal 10 may be a mobile terminal device represented by a smartphone, a wearable terminal, or the like.

As illustrated in FIG. 1, the information processing terminal 10 includes a display unit 11, an image capturing unit 12, a storage unit 13, and a control unit 15. Note that, in FIG. 1, only blocks corresponding to the continuous authentication function described above are extracted and schematized, and it may not be hindered that a functional unit other than the illustrated ones, for example, a functional unit that is included in an existing computer by default or as an option is provided in the information processing terminal 10.

The display unit 11 is a functional unit that displays various types of information. As merely an example, the display unit 11 may be implemented by a liquid crystal display, an organic electroluminescence (EL) display, or the like. Note that the display unit 11 may be implemented as a touch panel by being integrated with an input unit (not illustrated).

The image capturing unit 12 is a processing unit that captures an image. As merely an example, the image capturing unit 12 may be implemented by a camera equipped with an imaging element such as a charge coupled device (CCD) or a complementary metal oxide semiconductor (CMOS). Here, an "image" captured by the image capturing unit 12 has an aspect of being used for continuous authentication based on face recognition. From such an aspect, as an example of the camera capable of capturing an image of a face of a person who uses the information processing terminal 10, a camera arranged in the same direction as a direction of a screen of the display unit 11, a so-called in-camera, may be used as the image capturing unit 12.

The storage unit 13 is a functional unit that stores data used for various programs such as an authentication program that implements the continuous authentication function described above, including an operating system (OS) executed by the control unit 15.

As an embodiment, the storage unit 13 is implemented by an auxiliary storage device in the information processing terminal 10. For example, a hard disk drive (HDD), an optical disc, a solid state drive (SSD), or the like corresponds to the auxiliary storage device. Additionally, a flash memory such as an erasable programmable read only memory (EPROM) may correspond to the auxiliary storage device.

The storage unit 13 stores registration data 13A as an example of data to be used in a program executed by the control unit 15. In addition to the registration data 13A, the storage unit 13 may store various types of data such as account information of the information processing terminal 10. Note that description of the registration data 13A will be given together with description of the control unit 15 in which generation, registration, or reference is performed.

The control unit 15 is a processing unit that performs overall control of the information processing terminal 10. As an embodiment, the control unit 15 is implemented by a hardware processor such as a central processing unit (CPU) or a micro processing unit (MPU). While the CPU and the MPU are exemplified as an example of the processor here, it may be implemented by an optional processor regardless of whether it is a versatile type or a specialized type. Additionally, the control unit 15 may be implemented by hard wired logic such as an application specific integrated circuit (ASIC) or a field programmable gate array (FPGA).

By developing the authentication program described above on a memory (not illustrated), for example, on a work area of a random access memory (RAM), the control unit 15 virtually implements the following processing units. As illustrated in FIG. 1, the control unit 15 includes an acquisition unit 15A, a detection unit 15B, a calculation unit 15C, a collation unit 15D, a presentation unit 15E, and a continuation control unit 15F.

The acquisition unit 15A is a processing unit that acquires an image. As an embodiment, the acquisition unit 15A may acquire an image output from the image capturing unit 12 in frame units. Here, an information source from which the acquisition unit 15A acquires the image may be an optional information source, and is not limited to the image capturing unit 12. For example, the acquisition unit 15A may acquire the image from an auxiliary storage device such as a hard disk or an optical disc that accumulates images or a removable medium such as a memory card or a universal serial bus (USB) memory. Additionally, the acquisition unit 15A may also acquire the image from an external device other than the image capturing unit 12 via a network.

The detection unit 15B is a processing unit that detects a face region from an image. As an embodiment, the detection unit 15B may detect a face region from an image acquired by the acquisition unit 15A in frame units. In the following, as merely an example, an example in which a boundary of the face region on the image is detected as a rectangularly delimited region, or a so-called bounding box, will be described. However, this is only an exemplification, and the face region may be a region delimited by a polygon or an ellipse.

Here, an algorithm of "face detection" applied to the image by the detection unit 15B may be optional. As merely an example, a convolutional neural network (CNN) that has undergone machine learning such as deep learning may be used for the face detection. As another example, a support vector machine (SMV) that outputs a face or non-face label by using a histograms of oriented gradients (HOG) feature amount as an input may also be used. Additionally, an optional face detection algorithm may be applied, such as using a discriminator based on Haar-like features or using technologies such as template matching and skin color detection.

The calculation unit 15C is a processing unit that calculates a feature amount of a face. The "feature amount" referred to here may be optional. In the following, a case where an embedded vector is used will be exemplified as merely an example of the feature amount of a face. In this case, the calculation unit 15C may use a model in which an embedded space has been learned by deep learning or the like, for example, CNN. For example, for each face region detected by the detection unit 15B, the calculation unit 15C inputs a partial image corresponding to the face region to the CNN in which the embedded space has been learned. With this configuration, it is possible to obtain the embedded vector from the CNN for each face region. Note that the embedded vector is merely an example of the feature amount of a face, and another feature amount such as scale-invariant feature transform (SIFT) may be calculated, for example.

The collation unit 15D is a processing unit that collates a feature amount of a face calculated by the calculation unit 15C with a feature amount of a face included in the registration data 13A. As an embodiment, the collation unit 15D collates an embedded vector calculated by the calculation unit 15C with an embedded vector included in the registration data 13A for each face region detected by the detection unit 15B. As merely an example, the collation unit 15D determines whether or not a distance between the embedded vector calculated by the calculation unit 15C and the embedded vector included in the registration data 13A is equal to or smaller than a predetermined threshold. At this time, in a case where there is a face region in which the distance from the embedded vector included in the registration data 13A is equal to or smaller than the threshold, the face region is identified as a face of a legitimate user. On the other hand, a face region in which the distance from the embedded vector included in the registration data 13A exceeds the threshold is identified as a face of a third party.

Here, as the registration data 13A, information in which a feature amount of the face of the legitimate user is registered in advance as a part of the account information of the information processing terminal 10 may be used. Additionally, a feature amount of a face calculated by the calculation unit 15C at the time of successful logon to the information processing terminal 10 or at the time of successful unlock of the information processing terminal 10 may be regarded as the feature amount of the face of the legitimate user and automatically registered as the registration data 13A. Such automatic registration may eliminate the need for prior registration.

The presentation unit 15E is a processing unit that presents an aiming frame of a face region with which aim of capturing of an image of a face of a legitimate user is to be aligned on an image acquired by the acquisition unit 15A. As an embodiment, in a case where the image acquired by the acquisition unit 15A includes the face of the legitimate user and a face of a third party, in other words, in the case of use by a plurality of people, the presentation unit 15E presents the aiming frame of the face region described above. For example, the presentation unit 15E switches an image to be displayed on the display unit 11 from an image instructed by an OS or application being executed by the control unit 15 to an image acquired by the acquisition unit 15A. In the following, the image acquired by the acquisition unit 15A may be referred to as a "live image" from an aspect of distinguishing the image from a label of another image. Along with such switching of the display to the live image, the presentation unit 15E presents the aiming frame of the face region described above on the live image on the basis of a size of a face region corresponding to the face of the legitimate user. For example, the presentation unit 15E displays a region in which a size of a bounding box corresponding to the face of the legitimate user is enlarged at a predetermined magnification, for example, 1.2 times, as the aiming frame of the face region described above. At this time, the presentation unit 15E may overlap a center position between the bounding box and the aiming frame of the face region. Such a display mode of the aiming frame may be continued for a predetermined time, for example, 5 seconds after the display of the aiming frame is started.

The continuation control unit 15F is a processing unit that controls whether or not continuous authentication is continued. As an aspect, the continuation control unit 15F stops the continuous authentication in a case where a live image acquired by the acquisition unit 15A does not include a face of a legitimate user. In this case, the continuation control unit 15F locks the information processing terminal 10, for example, locks a function of the OS. In a case where the information processing terminal 10 is locked in this way, screen display of the display unit 11 may also be switched off.

As another aspect, the continuation control unit 15F determines whether or not the information processing terminal 10 is used by a plurality of people in a case where the live image acquired by the acquisition unit 15A includes the face of the legitimate user. For example, the continuation control unit 15F determines whether or not it is use by a plurality of people on the basis of whether or not the live image includes a face of a third party other than the legitimate user.

At this time, in a case where the live image includes only the face of the legitimate user, it may be identified as a state where the legitimate user uses the information processing terminal 10 alone, in other words, use by one person. In this case, the continuation control unit 15F continues the continuous authentication.

On the other hand, in a case where the live image includes a face of a third party other than the legitimate user, it may be identified as a state where the information processing terminal 10 is used by a plurality of people including the legitimate user, in other words, use by a plurality of people. In this case, the continuation control unit 15F determines whether or not it is within a predetermined time, for example, 5 seconds after display of an aiming frame of a face region by the presentation unit 15E is started.

Then, in the case of exceeding the predetermined time after the display of the aiming frame of the face region is started, it may be seen that a state where a bounding box corresponding to a face region of the legitimate user detected from the live image is not aligned with the aiming frame continues. In this case, there is an increased risk that the legitimate user is unaware of peeping by the third party, such as shoulder hacking, for example. Therefore, the continuation control unit 15F outputs an alert for peeping by a third party. For example, the continuation control unit 15F outputs, to the display unit 11, a message or icon warning of peeping by a third party, or outputs a message warning of peeping by a third party by voice from a voice output (not illustrated).

Furthermore, in the case of within the predetermined time after the display of the aiming frame of the face region is started, the continuation control unit 15F determines whether or not a degree of matching, which indicates a degree to which the bounding box corresponding to the face region of the legitimate user matches the aiming frame, satisfies a predetermined condition. For example, as an example of the "degree of matching", a ratio of an area of the bounding box to an area of the aiming frame, or a ratio of a length of a side or diagonal of the bounding box to a length of a side or diagonal of the aiming frame may be adopted. Furthermore, as an example of the "condition", an allowable range to be compared with the degree of matching, for example, °1 ± α" may be set. Moreover, as an example of the "condition", a threshold to be compared with a distance between center positions of the aiming frame and the bounding box, for example, the number of pixels may also be set. As merely an example, in a case where the ratio of the area of the bounding box to the area of the aiming frame is within 1 ± α, and the distance between the center positions of the aiming frame and the bounding box is within a predetermined number of pixels, the bounding box may be regarded to match the aiming frame.

Here, in a case where the degree of matching described above satisfies the predetermined condition, it may be regarded that an operation of moving the face by the legitimate user is accepted as an approval operation for use by a plurality of people. In this case, the continuation control unit 15F may also additionally register a feature amount of a face calculated from a face region of the third party to the registration data 13A as a quasi-user equivalent to the legitimate user. By additionally registering the feature amount of the face of the quasi-user in the registration data 13A in this way, in a case where the live image includes only the face of the quasi-user as the third party even in a case where the live image includes the face of the third party other than the legitimate user, in other words, in the case of use by a plurality of people, it is possible to skip presentation of the aiming frame and determine to continue the continuous authentication.

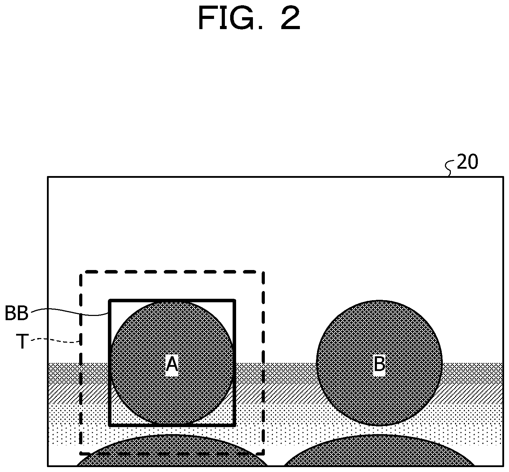

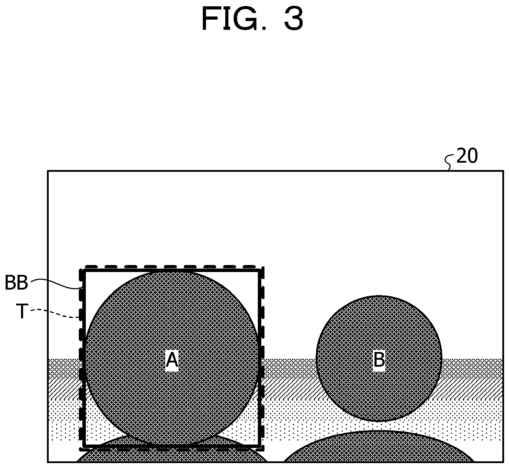

FIGs. 2 and 3 are diagrams illustrating an example of the live image. In FIGs. 2 and 3, a live image 20 including a face of a legitimate user A and a face of a third party B is illustrated. Moreover, in FIGs. 2 and 3, a bounding box BB corresponding to a face region of the legitimate user A is indicated by a solid line, and an aiming frame T of the face region is indicated by a broken line. For example, in a case where display of the aiming frame T is started, as illustrated in FIG. 2, screen display of the display unit 11 is switched from an image of the OS or application being executed to the live image 20. By such screen switching, it is possible to notify the legitimate user A that a use state of the information processing terminal 10 is use by a plurality of people. Moreover, in the live image 20, the bounding box BB corresponding to the face region of the legitimate user A is displayed by the solid line, and the aiming frame T is presented by the broken line. By the presentation of the bounding box BB and the aiming frame T, it is possible to enable an intuitive grasp that it is sufficient to perform an operation to make the bounding box BB and the aiming frame T match. Moreover, since a region obtained by enlarging a size of the bounding box BB is presented as the aiming frame T, as illustrated in FIG. 3, the bounding box BB may be matched with the aiming frame T by moving the face in a forward direction as viewed from the legitimate user A.

As illustrated in FIG. 3, in a case where the bounding box BB is matched with the aiming frame T, it may be regarded that an operation of approving browsing of the display unit 11 by the third party B with intention and action of the legitimate user A, in other words, use by a plurality of people is accepted. By accepting such an approval operation for use by a plurality of people, a situation where a third party peeps into use of the information processing terminal 10 by a legitimate user and a situation where a quasi-user equivalent to the legitimate user uses the information processing terminal 10 together with the legitimate user may be distinguished. Therefore, it is possible to implement continuous authentication that enables use by a plurality of people while suppressing peeping by a third party.

Note that, in FIG. 2, an example has been indicated where the region obtained by enlarging the size of the bounding box BB is presented as an example of the aiming frame T, but the present invention is not limited to this, and a region obtained by reducing the size of the bounding box BB may be presented as the aiming frame. In this case, a continuation operation of the continuous authentication may be accepted by moving the face in a backward direction as viewed from the legitimate user A.

### [Flow of Processing]

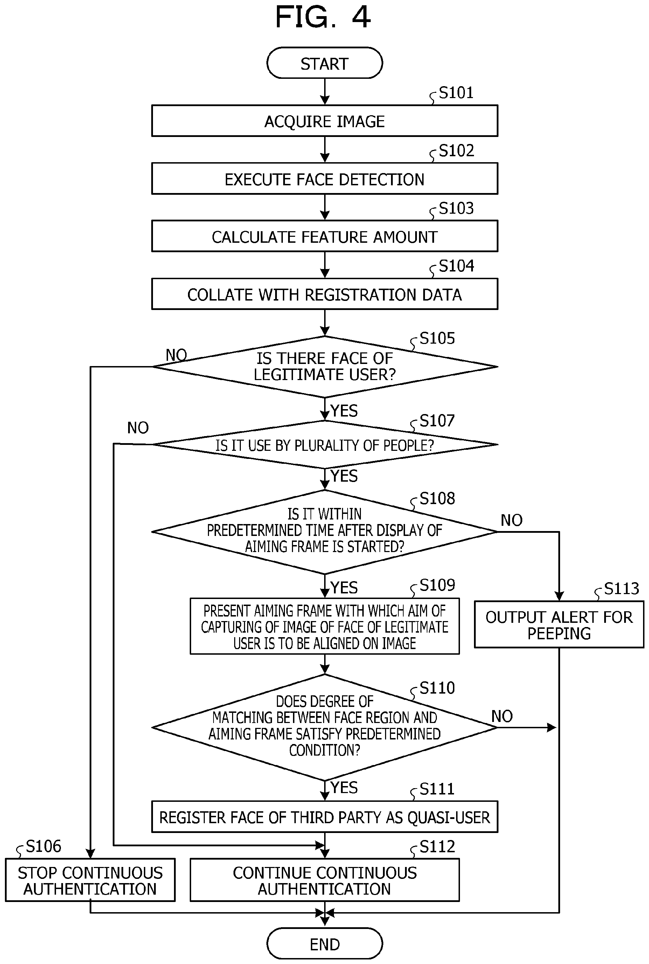

FIG. 4 is a flowchart illustrating a procedure of continuous authentication processing according to the first embodiment. As merely an example, this processing may be started in a case where a live image is acquired by the acquisition unit 15A. Furthermore, in a case where the information processing terminal 10 is locked, the information processing terminal 10 may be continuously locked until logon is successful again.

As illustrated in FIG. 4, when a live image is acquired by the acquisition unit 15A (Step S101), the detection unit 15B detects a face region from the live image acquired in Step S101 (Step S102).

Subsequently, by inputting, for each face region detected in Step S102, a partial image corresponding to the face region to a CNN in which an embedded space has been learned, the calculation unit 15C calculates an embedded vector (Step S103).

Then, the collation unit 15D collates the embedded vector calculated in Step S103 with an embedded vector included in the registration data 13A for each face region detected in Step S102 (Step S104). For example, while a face region in which a distance from the embedded vector included in the registration data 13A is equal to or smaller than a threshold is identified as a face of a legitimate user, a face region in which a distance from the embedded vector included in the registration data 13A exceeds the threshold is identified as a face of a third party.

At this time, in a case where the live image acquired in Step S101 does not include the face of the legitimate user (No in Step S105), the continuation control unit 15F stops continuous authentication (Step S106). In a case where the continuous authentication is stopped in this way, the continuation control unit 15F ends the processing after locking the information processing terminal 10, for example, locking the function of the OS.

On the other hand, in a case where the live image acquired in Step S101 includes the face of the legitimate user as well as a face of a third party other than the legitimate user, in other words, in the case of use by a plurality of people (Yes in Step S105 and Yes in Step S107), the following processing is performed. In other words, when it is within a predetermined time after display of an aiming frame of a face region is started (Yes in Step S108), the presentation unit 15E presents the aiming frame of the face region with which aim of capturing of an image of the face of the legitimate user is to be aligned on the live image acquired in Step S101 (Step S109).

Then, in a case where a degree of matching that a bounding box corresponding to the face region of the legitimate user matches the aiming frame satisfies a predetermined condition (Yes in Step S110), the continuation control unit 15F executes the following processing. In other words, the continuation control unit 15F additionally registers a feature amount of a face calculated from a face region of the third party to the registration data 13A as a quasi-user equivalent to the legitimate user, and then continues the continuous authentication (Step S111 and Step S112), and ends the processing.

Furthermore, in the case of exceeding the predetermined time after the display of the aiming frame of the face region is started (No in Step S108), it may be seen that a state where the bounding box corresponding to the face region of the legitimate user detected from the live image is not aligned with the aiming frame continues. In this case, there is an increased risk that the legitimate user is unaware of peeping by the third party, such as shoulder hacking, for example. Therefore, the continuation control unit 15F outputs an alert for peeping by a third party (Step S113), and ends the processing.

Note that, in a case where the live image includes only the face of the legitimate user, in other words, in the case of use by one person (Yes in Step S105 and No in Step S107), the continuation control unit 15F continues the continuous authentication (Step S112) and ends the processing.

### [One Aspect of Effects]

As described above, the information processing terminal 10 according to the present embodiment presents, in a case where a live image of an in-camera or the like includes a face of a user or a third party, a frame with which aim of capturing of an image of the face of the user is to be aligned on the live image, and in a case where a face region detected by face detection matches the frame, continues continuous authentication. Therefore, according to the information processing terminal 10 according to the present embodiment, it is possible to implement continuous authentication that enables use by a plurality of people. Moreover, since the use by a plurality of people is enabled, it is possible to suppress various collaborative work such as conferences, meetings, and travel planning work, for example, from being hindered by lock of the information processing terminal 10.

### [Second Embodiment]

Incidentally, while the embodiment related to the disclosed apparatus has been described above, the present invention may be carried out in a variety of different modes in addition to the embodiment described above. Thus, hereinafter, another embodiment included in the present invention will be described.

### [Application Example of Aiming Frame]

In the first embodiment described above, an example has been indicated where the size of the aiming frame is set on the basis of the size of the bounding box corresponding to the face region of the legitimate user. However, the size of the aiming frame does not necessarily have to be set to a size different from that of the bounding box. For example, a presentation unit 15E may also set a position of an aiming frame by translating a bounding box up, down, left, and right.

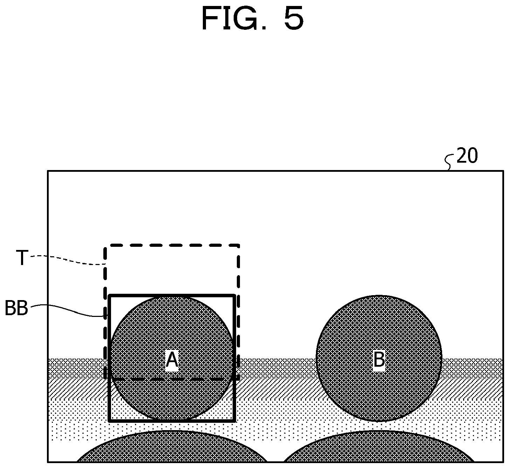

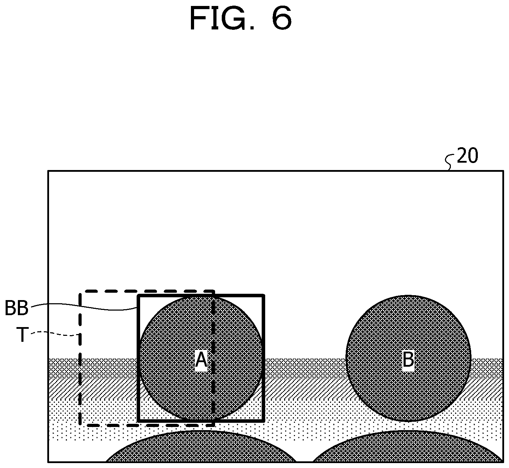

FIGs. 5 and 6 are diagrams illustrating an example of a live image. In FIGs. 5 and 6, a live image 20 including a face of a legitimate user A and a face of a third party B is illustrated. Moreover, in FIGs. 5 and 6, a bounding box BB corresponding to a face region of the legitimate user A is indicated by a solid line, and an aiming frame T of the face region is indicated by a broken line.

As illustrate in FIG. 5, the presentation unit 15E may present the aiming frame T having the same size as that of the bounding box BB at a position where the bounding box BB is translated in an upward direction. In this case, the bounding box BB may be matched with the aiming frame T by moving the face in the upward direction as viewed from the legitimate user A. Furthermore, as illustrate in FIG. 6, the presentation unit 15E may present the aiming frame T having the same size as that of the bounding box BB at a position where the bounding box BB is translated in a leftward direction. In this case, the bounding box BB may be matched with the aiming frame T by moving the face in the leftward direction as viewed from the legitimate user A. Note that, in FIGs. 5 and 6, a case has been exemplified where the aiming frame T is presented at the position where the bounding box BB is translated in the upward direction or the leftward direction. However, it is also possible to present the aiming frame T at a position where the bounding box BB is translated in a downward direction or a rightward direction.

Here, a movement direction and a movement amount for translating the bounding box BB do not necessarily have to be a fixed amount. As merely an example, the presentation unit 15E may also determine the movement direction and the movement amount of the bounding box BB on the basis of a margin region in which a face region of a legitimate user, a third party, or the like is not detected. For example, the aiming frame T may be presented at a position where the bounding box BB is translated in a direction in which a distance from the bounding box BB to a boundary portion of the margin region is maximum among up, down, left, and right. Furthermore, it is possible to set a movement amount with which the bounding box BB fits within the margin region as an upper limit and determine a position where the bounding box BB is to be translated within a range of the upper limit.

Furthermore, also in a case where the size of the aiming frame is set on the basis of the size of the bounding box corresponding to the face region of the legitimate user, a magnification of enlargement or reduction of the bounding box does not necessarily have to be fixed. As merely an example, the presentation unit 15E may set the magnification of enlargement or reduction of the bounding box on the basis of the margin region in which the face region of the legitimate user, the third party, or the like is not detected. For example, it is possible to set a magnification at which the bounding box BB after enlargement does not extend beyond the margin region as an upper limit and enlarge the bounding box BB by a magnification within a range of the upper limit.

Note that the enlargement or reduction of the bounding box and the translation of the bounding box do not necessarily have to be performed separately. For example, the enlargement or reduction of the bounding box and the translation of the bounding box may be performed in combination.

### [Application Example other than Stand-Alone]

In the first embodiment described above, an example has been indicated where the continuous authentication function described above is provided in a stand-alone manner. However, a form of providing the continuous authentication function described above is not limited to the stand-alone manner. For example, a server device to which a thin client terminal or a zero client terminal is connected via a network may provide the continuous authentication function described above.

### [Distribution and Integration]

Furthermore, each of the illustrated components in each of the devices does not necessarily have to be physically configured as illustrated in the drawings. In other words, specific modes of distribution and integration of the individual devices are not limited to those illustrated, and all or a part of the devices may be configured by being functionally or physically distributed and integrated in an optional unit depending on various loads, use situations, and the like. For example, the acquisition unit 15A, the detection unit 15B, the calculation unit 15C, the collation unit 15D, the presentation unit 15E, or the continuation control unit 15F may be connected by way of a network as an external device of the information processing terminal 10. Furthermore, different devices each may include the acquisition unit 15A, the detection unit 15B, the calculation unit 15C, the collation unit 15D, the presentation unit 15E, or the continuation control unit 15F and may be connected to a network to cooperate with each other, whereby the function of the information processing terminal 10 described above may be implemented.

### [Authentication Program]

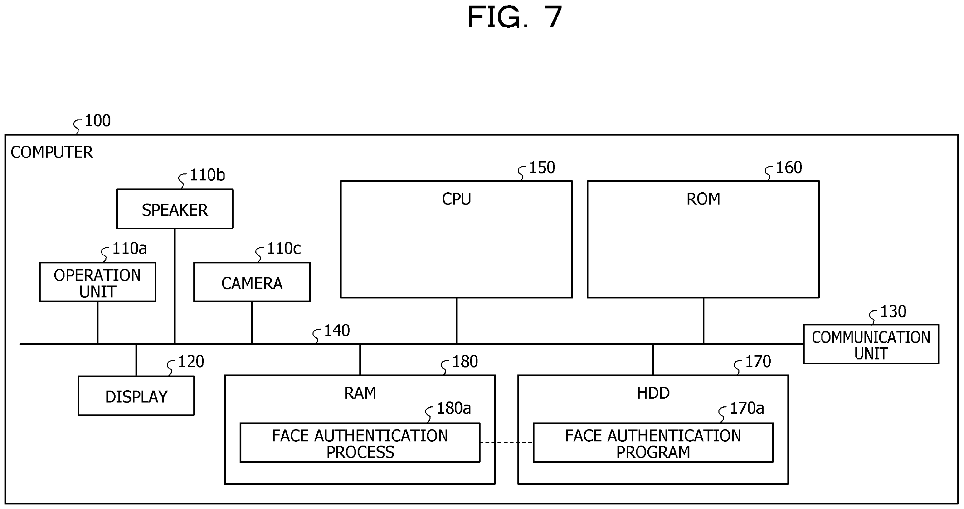

Furthermore, various types of processing described in the embodiments described above may be implemented by executing a program prepared in advance by a computer such as a personal computer or a workstation. Thus, hereinafter, an example of a computer that executes an authentication program having functions similar to those in the first and second embodiments will be described with reference to FIG. 7.

FIG. 7 is a diagram illustrating a hardware configuration example of the computer. As illustrated in FIG. 7, a computer 100 includes an operation unit 110a, a speaker 110b, a camera 110c, a display 120, and a communication unit 130. Moreover, the computer 100 includes a CPU 150, a ROM 160, an HDD 170, and a RAM 180. These individual units 110 to 180 are connected via a bus 140.

As illustrated in FIG. 7, the HDD 170 stores an authentication program 170a that exhibits functions similar to functions of the acquisition unit 15A, the detection unit 15B, the calculation unit 15C, the collation unit 15D, the presentation unit 15E, and the continuation control unit 15F indicated in the first embodiment described above. The authentication program 170a may be integrated or separated in a similar manner to each of the components of the acquisition unit 15A, the detection unit 15B, the calculation unit 15C, the collation unit 15D, the presentation unit 15E, and the continuation control unit 15F illustrated in FIG. 1. In other words, all pieces of data indicated in the first embodiment described above do not necessarily have to be stored in the HDD 170, and it is sufficient that data for use in processing is stored in the HDD 170.

Under such an environment, the CPU 150 reads out the authentication program 170a from the HDD 170, and develops the authentication program 170a in the RAM 180. As a result, the authentication program 170a functions as an authentication process 180a as illustrated in FIG. 7. The authentication process 180a develops various types of data read out from the HDD 170 in a region allocated to the authentication process 180a in a storage region included in the RAM 180, and executes various types of processing by using the various types of developed data. For example, examples of the processing to be executed by the authentication process 180a include the processing illustrated in FIG. 4. Note that all the processing units indicated in the first embodiment described above do not necessarily operate in the CPU 150, and it is sufficient that a processing unit corresponding to processing to be executed is virtually implemented.

Note that the authentication program 170a described above does not necessarily have to be stored in the HDD 170 or the ROM 160 from the beginning. For example, each program is stored in a "portable physical medium" such as a flexible disk, which is a so-called FD, CD-ROM, DVD disk, magneto-optical disk, or IC card to be inserted into the computer 100. Then, the computer 100 may acquire and execute each program from these portable physical media. Furthermore, each program may be stored in another computer, server device, or the like connected to the computer 100 via a public line, the Internet, a LAN, a WAN, or the like, and the computer 100 may acquire each program from them to execute the program.

### CITATION LIST

### PATENT DOCUMENT

Patent Document 1: Japanese Laid-open Patent Publication No. 2007-322549
Patent Document 2: Japanese Laid-open Patent Publication No. 2017-117155
Patent Document 3: Japanese Laid-open Patent Publication No. 2015-207275

### REFERENCE SIGNS LIST

10 Information processing terminal
11 Display unit
12 Image capturing unit
13 Storage unit
13A Registration data
15 Control unit
15A Acquisition unit
15B Detection unit
15C Calculation unit
15D Collation unit
15E Presentation unit
15F Continuation control unit

## Claims

1. An authentication apparatus comprising:
an acquisition unit that acquires an image;
a detection unit that performs face detection of the image;
a collation unit that collates, for each face region obtained by the face detection, a feature amount of the face region with a feature amount of a face of a legitimate user included in predetermined registration data;
a presentation unit that presents, in a case where the face region obtained by the face detection includes the face of the legitimate user and a face of a third party other than the legitimate user, an aiming frame with which aim of capturing of an image of the face of the legitimate user is to be aligned on the image; and
a continuation control unit that continues continuous authentication after logon in a case where a degree of matching between the face region detected by the face detection and the aiming frame satisfies a predetermined condition.

2. The authentication apparatus according to claim 1, wherein a size of the aiming frame is set on the basis of a size of a face region of the legitimate user.

3. The authentication apparatus according to claim 2, wherein the size of the aiming frame is a size obtained by enlargement or reduction of the face region of the legitimate user by a predetermined magnification.

4. The authentication apparatus according to claim 3, wherein the magnification is set on the basis of a margin region in which the face region of the legitimate user and a face region of the third party are not detected.

5. The authentication apparatus according to claim 1, wherein a position of the aiming frame is set to a position where a face region of the legitimate user is translated in an upward direction, a downward direction, a leftward direction, or a rightward direction.

6. The authentication apparatus according to claim 5, wherein a movement direction and a movement amount of the translation is set on the basis of a margin region in which the face region of the legitimate user and a face region of the third party are not detected.

7. An authentication method implemented by a computer, the authentication method comprising:
acquiring an image;
performing face detection of the image;
collating, for each face region obtained by the face detection, a feature amount of the face region with a feature amount of a face of a legitimate user included in predetermined registration data;
presenting, in a case where the face region obtained by the face detection includes the face of the legitimate user and a face of a third party other than the legitimate user, an aiming frame with which aim of capturing of an image of the face of the legitimate user is to be aligned on the image; and
continuing continuous authentication after logon in a case where a degree of matching between the face region detected by the face detection and the aiming frame satisfies a predetermined condition.

8. The authentication method according to claim 7, wherein a size of the aiming frame is set on the basis of a size of a face region of the legitimate user.

9. The authentication method according to claim 8, wherein the size of the aiming frame is a size obtained by enlargement or reduction of the face region of the legitimate user by a predetermined magnification.

10. The authentication method according to claim 9, wherein the magnification is set on the basis of a margin region in which the face region of the legitimate user and a face region of the third party are not detected.

11. The authentication method according to claim 7, wherein a position of the aiming frame is set to a position where a face region of the legitimate user is translated in an upward direction, a downward direction, a leftward direction, or a rightward direction.

12. The authentication method according to claim 11, wherein a movement direction and a movement amount of the translation is set on the basis of a margin region in which the face region of the legitimate user and a face region of the third party are not detected.

13. An authentication program comprising instructions which, when executed by a computer, cause the computer to perform processing, the processing comprising:
acquiring an image;
performing face detection of the image;
collating, for each face region obtained by the face detection, a feature amount of the face region with a feature amount of a face of a legitimate user included in predetermined registration data;
presenting, in a case where the face region obtained by the face detection includes the face of the legitimate user and a face of a third party other than the legitimate user, an aiming frame with which aim of capturing of an image of the face of the legitimate user is to be aligned on the image; and
continuing continuous authentication after logon in a case where a degree of matching between the face region detected by the face detection and the aiming frame satisfies a predetermined condition.

14. The authentication program according to claim 13, wherein a size of the aiming frame is set on the basis of a size of a face region of the legitimate user.

15. The authentication program according to claim 14, wherein the size of the aiming frame is a size obtained by enlargement or reduction of the face region of the legitimate user by a predetermined magnification.

16. The authentication program according to claim 15, wherein the magnification is set on the basis of a margin region in which the face region of the legitimate user and a face region of the third party are not detected.

17. The authentication program according to claim 13, wherein a position of the aiming frame is set to a position where a face region of the legitimate user is translated in an upward direction, a downward direction, a leftward direction, or a rightward direction.

18. The authentication program according to claim 17, wherein a movement direction and a movement amount of the translation is set on the basis of a margin region in which the face region of the legitimate user and a face region of the third party are not detected.
